# EUROPEAN PATENT APPLICATION

(11) **EP 1 036 698 A1**
(43) Date of publication of application: **20.09.2000**
(21) Application number: 00200885.2
(22) Date of filing: 13.03.2000
(51) Int. Cl.: B60P 1/44

(54) **Lifting tailgate with interchangeable elements and direct suspension**

(30) Priority: 16.03.1999 IT MI990529
(71) Applicant: Dautel Campisa S.r.l., 20030 Pallazzolo Milanese, Milano (IT)
(72) Inventor: Nelzi, Giampaolo, 22070 Appiano Gentile Como (IT)
(74) Representative: Parisi, Luigi

(57) **Abstract**

A lifting tailgate (SP) with interchangeable elements and direct suspension comprising at least one bearing tube (TP) adapted to be connected to a rear portion of an industrial vehicle, the bearing tube (TP) supporting, by means of first flanges (FL), a fork (FO), controlled by at least two cylinders (CS, CJ), which carries a platform (PT), where the first flanges (FL) are made of self-lubricating material.

## Description

This invention refers to a lifting tailgate with interchangeable elements and direct suspension.

It is known that industrial vehicles have, at the rear, lifting tailgates composed of a platform for lifting loads from the ground up to a bed of the vehicle.

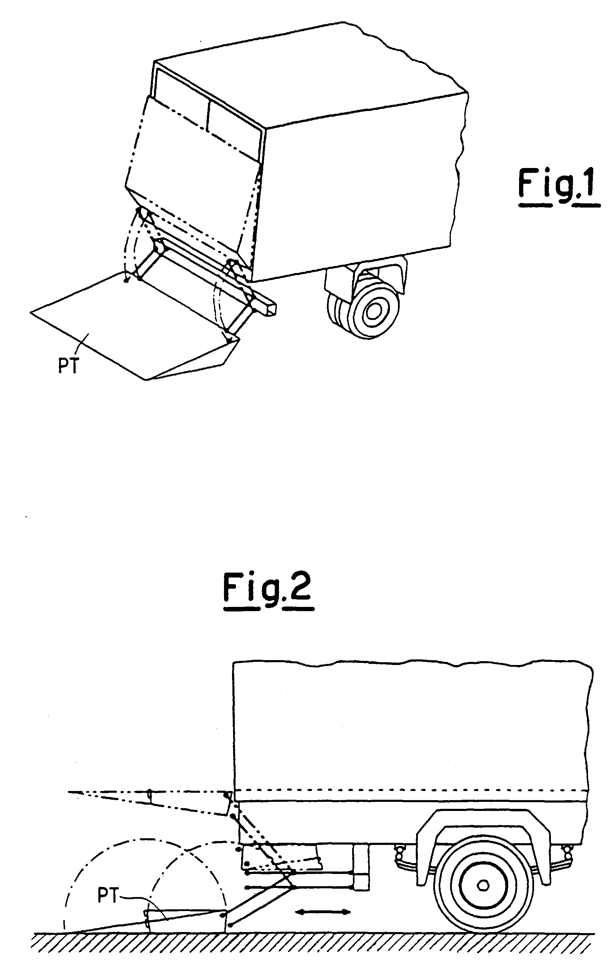

Tailgates are divided into two groups: vertical tailgates (figure 1), in which the platform is vertically closed during transport, and retractable tailgates (figure 2) in which the platform is folded, generally once or twice, and the whole assembly is drawn back under the rear overhang of the industrial vehicle during transport. Lifting tailgates also comprise a mechanism for moving the platform.

To show clearly the technical problems concerning lifting tailgates, to which this invention refers, a brief description is given below, referring to figures 1 to 5.

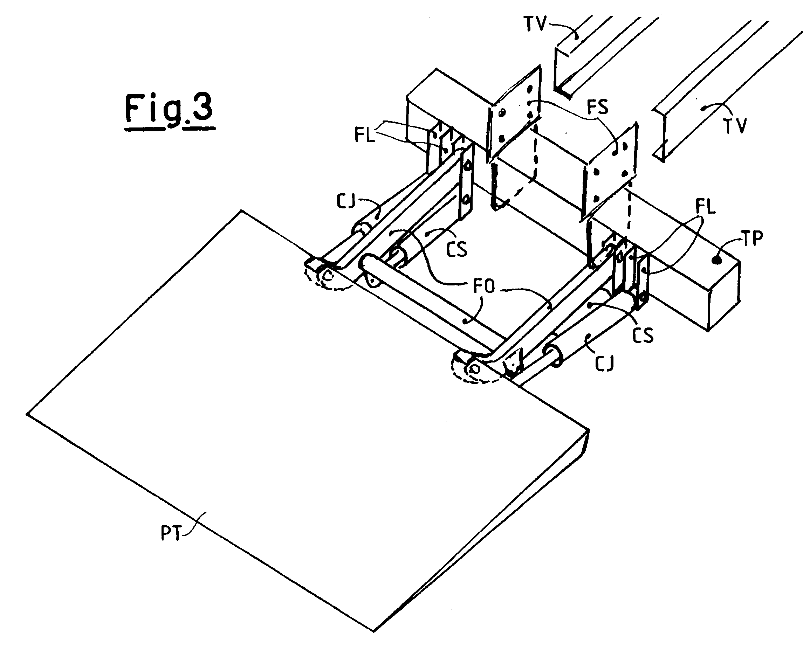

Traditional vertical lifting tailgates (figure 3) consist of a platform PT articulated on a fork FO which, in turn, is articulated on two flanges FL which are part of a bearing tube TP. Flanges FS are applied on the bearing tube TP to allow the fork FO and therefore the platform PT to be connected suspended from a vehicle chassis TV.

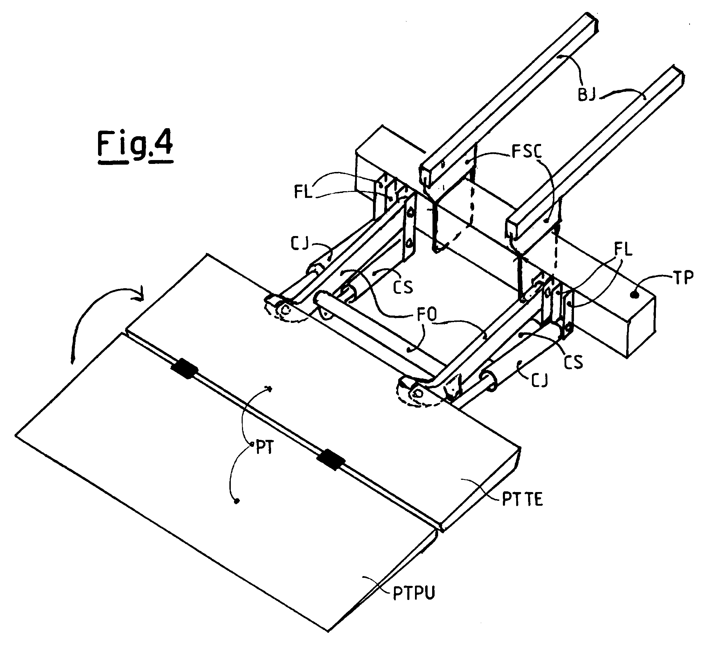

In the case of traditional retractable tailgates (figure 4), on a bearing tube TP are applied flanges FSC that hang and slide in tracks BJ, which are fixed to the vehicle chassis. The platform PT is generally divided into two or three parts PTTE-PTPU, which fold once or several times.

Two cylinders CS (figure 3, 4) push up the platform PT to lift it and brake its descent, so that it remains horizontal as it goes up and down. This is possible because under the fork FO are articulated two further hydraulic cylinders CJ which constitute two quadrilaterals articulated on identical facing sides. When they make contact with the ground, the cylinders CJ are retracted, shortening two sides of the articulated quadrilaterals, so as to obtain tilting of the tip of the platform PT towards the ground.

This system has many drawbacks due to the fact that, when the tip of the platform PT makes contact with the ground and, at the same time, the cylinders CJ are shortened to make the tip touch the ground, there is considerable friction at the points where the platform PT touches the ground.

This phenomenon leads to a digging action in the ground, which occurs when the suspensions of the industrial vehicle are lifted and lowered, simultaneously with the unloading of the load placed on the platform, when the platform comes in contact with the ground.

Currently the best technique for relieving this problem is to apply a wheel made of rigid material at each point of contact with the ground.

The construction of the traditional vertical lifting tailgate is normally made with the flanges FL, onto which is articulated the fork FO, and these are welded to the bearing tube TP. This type of construction has the considerable disadvantage that, in the event of wear of the flanges, the whole lifting tailgate must be replaced or, at least, the whole of its bearing tube TP. In fact, the replacement of the welded flanges FL involves flame cutting which, besides being expensive, deforms the tube TP.

Moreover, all the fulcrums of the two quadrilaterals and of the cylinders must be made with anti-friction materials and lubricated. As a result, continuous maintenance is necessary to grease them, failing which there will be certain wear of the bushes of the flange, making it necessary to replace the whole bearing tube TP.

The articulation of the fork FO on the platform PT is also made with flanges. These are generally welded when the platform PT is made of steel, or they are welded or bolted when the platform PT is made of aluminium. This structure too requires continuous maintenance for greasing, failing which there will be certain wear of the bushes of the flange, making it necessary to replace the whole platform when the flanges are welded onto it.

Unloading of the mass applied on the platform PT on the chassis TV of the vehicle is currently achieved using the bearing tube TP with the function of supporting the torsional stress due to the mass applied on the platform PT and transmitted to it through the parallelogram composed of the fork FO and the cylinders CJ through the flanges FL (figure 3, 4), currently welded onto the tube TP. The mass is transmitted again, in an area closer to the centre of the bearing tube TP, to the vehicle chassis TV through the fixed flanges FS (figure 3) or the sliding flanges FSC (figure 4), with enormous torsional stress on the tube TP which, therefore, must have particularly robust dimensions.

A further problem is presented by the necessity, due to the different constitution of semitrailer chassis, to build tailgates with forks FO which have their two arms very close together. This means that the shifting of the mass applied on the platform towards its side edge (for example to unload goods from the side) causes exceptional torsional overloads on the fork and a high overload on only one of the two arms that make up the same fork.

Another problem is the dead load of the tailgate which reduces the working load of the vehicle.

The control cylinders for operating the tailgate are generally hydraulically controlled by oil circulating in a hydraulic circuit. The hydraulic circuit that operates lifting tailgates is conceived in different ways, depending on whether there is one or more than one control cylinder, depending on whether the automatic contact with the ground is achieved using a compensating circuit, or depending on whether the cylinders have a single or dual effect.

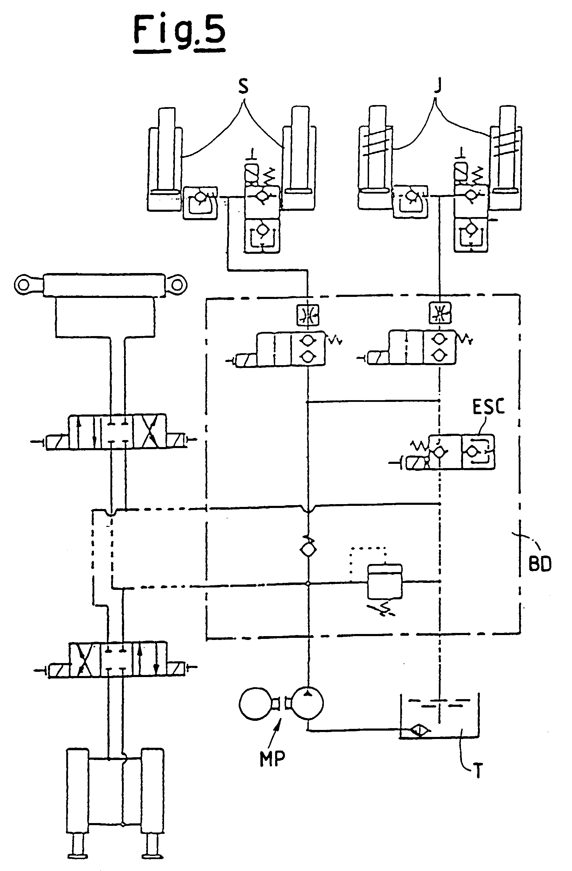

In any case, all the circuits use systems for distributing hydraulic oil (figure 5) which comprise a circuit in which the pressurised hydraulic oil, supplied for example by an electro-hydraulic motor M or by other sources, is distributed by a hydraulic distribution block BDI to the lifting cylinders S and/or to the tilting cylinders J for lifting and closing the tailgate. For lowering the tailgate, in the same distribution block there is generally a discharge electrovalve ESC which causes the hydraulic oil to flow into a tank T during opening or lowering of the platform PT. The oil accumulated in the tank T is then sucked up and filtered in subsequent uses.

This hydraulic circuit presents the disadvantage that a very large portion of the hydraulic oil is composed of the residue of the oil contained in the cylinders and in the circuit pipes as far as the discharge valve ESC. This portion of the oil remains permanently in the circuit without ever returning to the tank T, so it is practically never refiltered. For this reason, any impurities present in the oil, which come away from the internal walls of the circuit even after long periods of use, may get stuck in the electrovalves of the system, blocking them or preventing perfect closure thereof, with consequent phenomena of internal oil leakage.

The aim of this invention is to eliminate the technical problems encountered, realising a lifting tailgate with interchangeable elements and direct suspension the maintenance of which is substantially inexpensive in comparison with traditional tailgates and, moreover, which does not require the replacement of the complete tailgate or of a considerable number of its components permanently associated with each other when only some of its parts are damaged or worn.

Another aim of the invention is to realise a tailgate that does not require frequent and complex maintenance operations.

Another aim of the invention is to realise a tailgate that is light-mass in comparison with traditional tailgates, so that its dead load does not drastically limit its working load.

Another aim of the invention is to realise a tailgate in which the hydraulic oil in the operating circuit is always kept clean, to guarantee the reliability and safety of the mechanisms.

The last but not the least aim of the invention is to realise a lifting tailgate with interchangeable elements and direct suspension which is simple, safe and reliable.

These and other aims, according to this invention, are achieved realising a lifting tailgate with interchangeable elements and direct suspension according to claim 1.

Other characteristics of this invention are defined in the following claims.

The advantage lies in the fact that the lifting tailgate according to this invention allows some of the elements of which it is composed to be subjected to limited stress in comparison with the traditional embodiments; this means that these elements may be produced with substantially reduced dimensions, so that the lifting tailgates are lighter, with relative advantages as regards costs and mass.

Further characteristics and advantages of a lifting tailgate with interchangeable elements and direct suspension according to this invention will be clear from the following description, supplied purely as an example without limitation, referring to the enclosed schematic drawings in which:
- figure 1 shows a perspective view of a rear portion of an industrial vehicle fitted with a traditional vertical lifting tailgate;
- figure 2 shows an elevation side view of a rear portion of an industrial vehicle fitted with a traditional retracting lifting tailgate;
- figure 3 shows a perspective view of a traditional vertical lifting tailgate;
- figure 4 shows a perspective view of a traditional retracting lifting tailgate;
- figure 5 shows a diagram of a hydraulic circuit for operating a traditional lifting tailgate;
- figure 6 shows a perspective view of a vertical lifting tailgate according to the invention;
- figure 6B shows an elevation side view of the vertical lifting tailgate shown in figure 6;
- figure 7 shows an enlarged perspective view of a fork forming part of the tailgate shown in figure 6;
- figure 8 shows an enlarged side view of a detail of the fork shown in figure 7;
- figure 9 shows an exploded perspective view of a detail of a connection of the vertical lifting tailgate according to the invention to a vehicle chassis;
- figure 10 shows an elevation and assembled side view of a different solution of the elements shown in figure 9;
- figure 10A shows a perspective view of a detail of figure 10;
- figure 11 shows a perspective view of a retracting lifting tailgate according to the invention;
- figure 12 shows an enlarged elevation side view of a detail of figure 11;
- figure 13 shows an elevation side view of a detail of a retracting tailgate according to the invention
- figure 14 shows an elevation front view of a second embodiment of the retracting lifting tailgate according to the invention;
- figure 15 shows a perspective view of a first embodiment of a platform for vertical tailgates according to the invention;
- figure 15A shows an elevation side view of the platform shown in figure 15;
- figure 16 shows an elevation side view of a second embodiment of the platform for vertical tailgates according to the invention;
- figure 17 shows a perspective view of a first embodiment of a tilting system for making contact with the ground;
- figure 18 shows a perspective view of a second embodiment of the tilting system for making contact with the ground;
- figure 19 shows a diagram of a hydraulic circuit for operating the lifting tailgates according to the invention;
- figure 20 shows an elevation side section view of a bearing tube which carries elements of a hydraulic circuit of the tailgate according to the invention;
- figure 21 shows a schematic view of the layout of a hydraulic circuit associated with a tailgate according to the invention.

With reference to the figures listed, a lifting tailgate with interchangeable elements is shown, indicated generally with the reference SP.

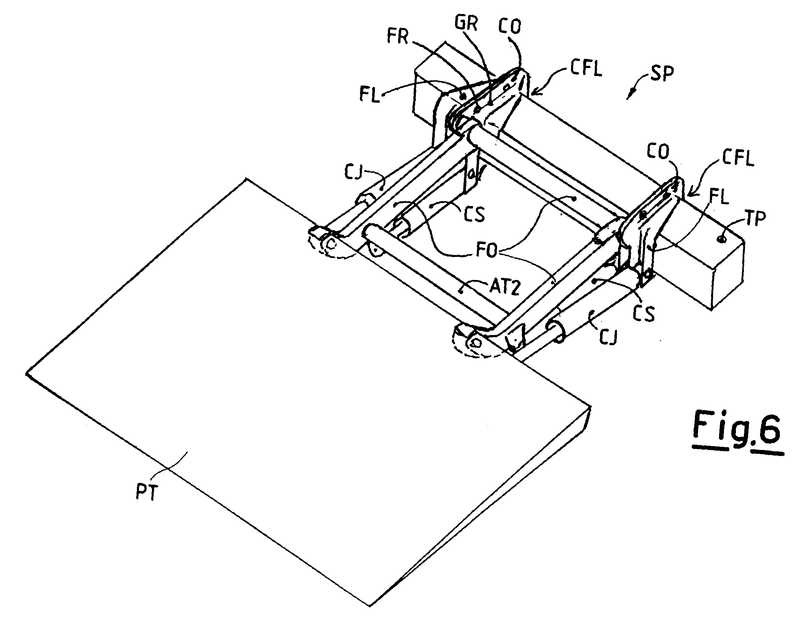

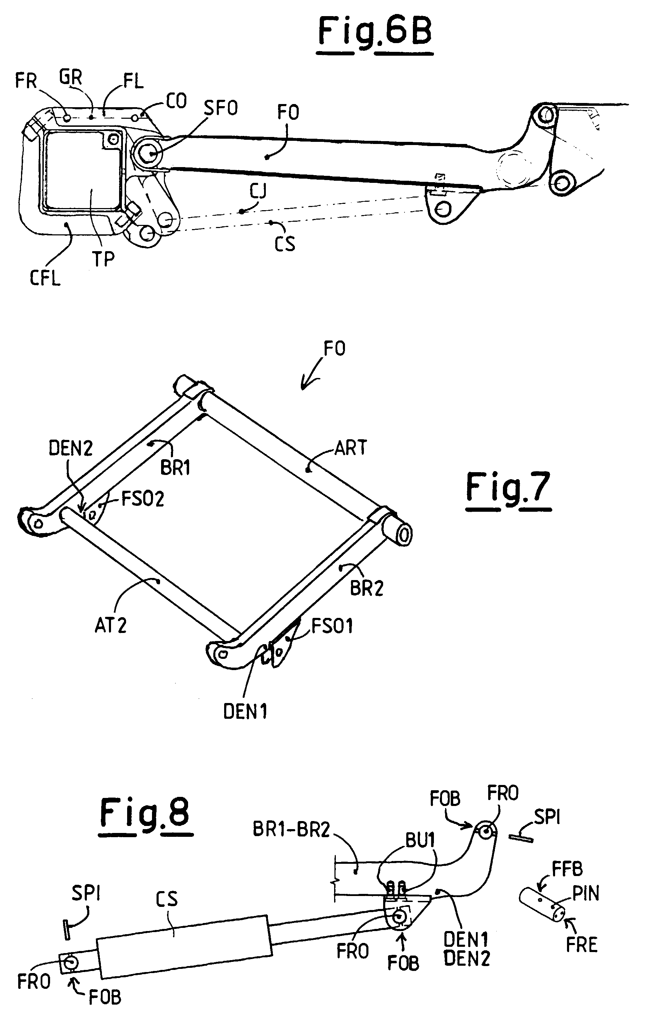

The tailgate SP (figure 6) comprises a bearing tube TP, for connection to a rear portion of an industrial vehicle, which supports a platform PT by means of a fork FO.

The fork FO is connected to the bearing tube TP by means of two articulated flanges FL, connected in such a way that they may be removed, by means of one or more screws, to the counterflange CFL. The counterflanges CFL complete a perimeter the same as that of the tube TP and they are applied on it like a necktie.

In different embodiments, the flanges FL are connected in such a way that they may be removed, for example bolted, directly onto the tube TP or are welded directly onto the tube TP. Furthermore the flanges FL and the counterflanges CFL may be made in a single piece, connected in such a way that it may be removed or welded onto the tube TP.

The flanges FL and the counterflanges CFL are preferably made in such a way as to bear completely and alone the torsional stress produced by a load supported by the platform PT.

An upper portion of the flanges FL (figures 6, 6B) presents a rib CO which runs preferably all along its length. The rib CO preferably presents one of its free ends enlarged and shaped to form a step GR. Moreover, on a side portion of each rib CO there are preferably through holes FR, for example two such holes.

Each flange FL preferably presents a seat SFO for the rotating connection of the fork FO, but it may also present seats for the rotation of a fork of traditional type.

The fork FO (figure 7) may be composed of two arms BR1 and BR2, made preferably of oxygen-cut steel, joined together by a bar or section ART. The section ART is preferably cylindrical and its function is both one of mutual connection and torsion resistance for the arms BR1 and BR2, and a function as rotation fulcrum of the fork FO. In fact the ends of the section ART are projecting and are inserted so that they can turn inside the seats SFO of the flanges FL, which are preferably made of self-lubricating material, for example spheroidal cast iron. In the cases in which very high stress is expected on the fork FO it is reinforced with the addition of a second anti-torsion bar AT2 (figure 7) connected near the curved ends of the arms BR1 and BR2.

Adjacent to the curved ends, the arms BR1 and BR2 have respectively at least one flange FS01 and FS02 to which is connected at least one lifting cylinder CS (figure 8). The flanges FS01 and FS02 may be made of self-lubricating material, for example spheroidal cast iron, and they are each applied next to a tooth DEN1, DEN2 obtained from a piece of each arm BR1, BR2 of the fork FO. The teeth DEN1 and DEN2 receive nearly all the lifting force, while a residual component of the force is supported preferably by one or more fixing bolts BU1, which are also used for holding the flanges FS01 and FS02 in position.

The flanges FS01 and FS02 are made of self-lubricating material so that it is possible to insert and turn in the holes FRO made in them (figure 8) some pins PIN without particular processing or particular intermediaries against friction. The pins PIN are simply cylindrical and free from particular processing such as, for example, an internal hole or a spider for greasing.

The pins PIN are blocked inside the holes FRO which are the fulcrum of rotation for the fork FO and for the cylinders CS, for example by means of a spring pin SPI which passes through a hole FFB located on a diameter of the pin PIN and two portions of hole FOB placed on the diameter of the hole FRO in which the pin PIN must be fixed. For centring of the holes FFB and FOB, the pins PIN are preferably provided with two holes FRE on at least one of the heads, inside which a key ending in two pins may be inserted.

The tailgates are connected hanging from an industrial vehicle chassis.

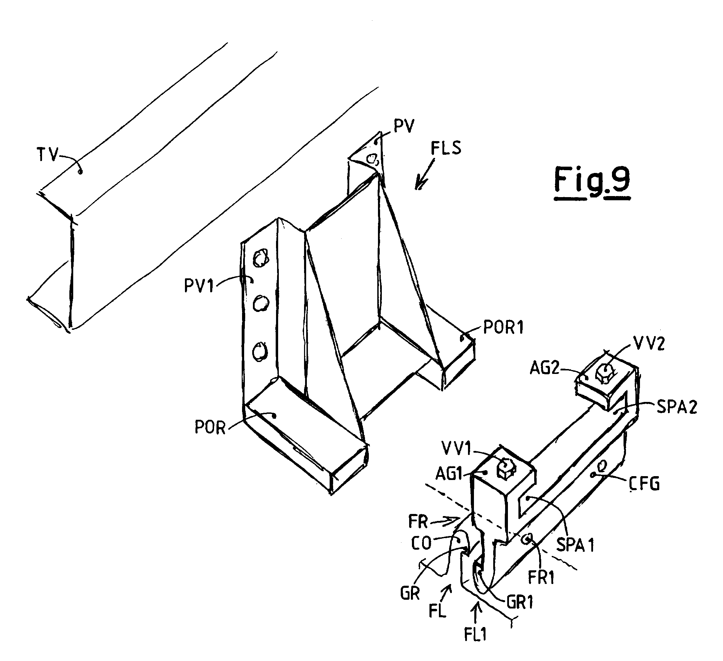

In particular (figure 9), in the vertical embodiment of the tailgate, on the rib CO and on the step GR located above the flange FL, a flange CFG is connected, preferably in such a way that it may be removed, approximately of the same length as the flange FL. The flange CFG preferably presents an enlarged portion, preferably forming at least one step GR1, facing upward when the flange CFG is fitted on the flange FL, preferably of the same length as the flange CFG. The flange CFG preferably has through holes FR1 corresponding to the holes FR in the flange FL. Moreover, on one portion of the flange CFG facing upward after assembly on the tailgate there are preferably protruding parts AG1, AG2 towards the inside of the flange CF, which have, underneath, calibrated spaces SPA1, SPA2.

The flange CFG mates with the rib CO on the flange FL and the assembly is secured preferably by means of bolts inserted in the aligned holes FR, FR1. At the same time the steps GR, GR1 mate together and a portion of the flange CFG located on a side opposite the fork can rest against an upper portion FL1 of the flange FL.

Above the flange CFG, for hanging from the vehicle chassis, there are preferably hanging plates FLS which constitute the means of connection to the vehicle chassis TV. The plates FLS are made up of a first pair of flat portions PV, PV1 joined to a second pair of flat portions POR, POR1 placed at a right angle to the first. Between the pairs of flat portions joined at a right angle, the hanging plates FLS preferably present a stiffening, spacing and reciprocal connection structure. The plates PV, PV1 of the hanging plate FLS may be provided with through holes, for fixing the plate FLS to the industrial vehicle chassis.

Each hanging plate FLS is coupled to one of the flanges CFG by inserting the two projecting parts AG1 and AG2 in the two flat parts POR and POR1 of the flange FLS, within which the parts AG1 and AG2 can slide. It is thus possible to hang the lifting tailgate, adapting the width of the vehicle chassis to the flanges FL. In fact the connection is achieved by letting the hanging plates FLS run in the flanges CFG on the flat parts POR and POR1, engaging the step GR1 of the flange CFG in the step GR of the flange FL and blocking them all with screws passing through the aligned holes FR, FR1, always keeping the flanges FL in the same position with respect to the tailgate bearing tube.

The load supported by the platform PT is supported by the coupling of the steps GR and GR1 and, moreover, in the portion opposite the fork where the projecting load leads to detaching of the two steps, the load is preferably supported by the flange CFG leaning against the top surface FL1 of the flange FL onto which the latter is bolted.

Any movement of the flanges CFG with respect to the flanges FLS in which or over which they run, may be blocked for example by means of screws VV1, VV2.

In different embodiments, the sliding coupling between the flanges CFG and the flange FLS may be obtained by inserting the jointing and sliding system between the two. This may be achieved by making the two projecting parts AG1 and AG2 on the flange FLS and the two flat parts on the flange FL, or by making the two projecting parts AG1 and AG2 facing outward, that is opposed to each other, inserting them in two horizontal portions of the flange FLS facing inward, or one facing inward and the other facing outward. Another embodiment may be composed of a mixed jointing and bolting system.

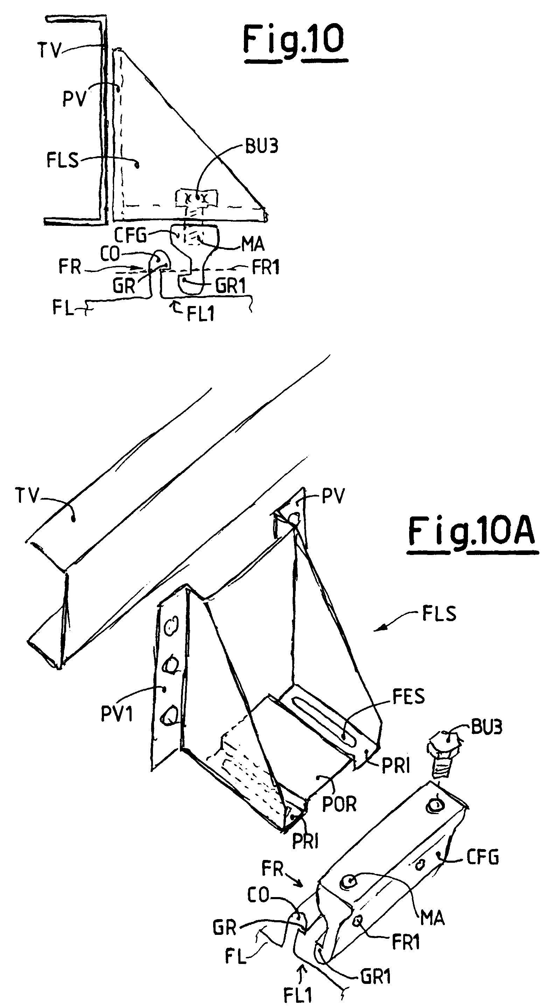

In another embodiment, the flange CFG is bolted onto the flange FLS by means of bolts which can slide in a hole or an elliptical slot (figure 10, 10A). In this case the flange FLS presents flat portions PV, PV1 with holes for connection to the vehicle chassis TV and, integral with the portions PV, PV1. through the structure of the flanges FLS, further flat portions PRI arranged at a right angle to the portions PV, PV1. Between the flat portions PRI is placed the stiffening and mutual connecting portion POR. The flat portions PRI have elliptical slots FES in which are inserted bolts BU3 fixed in threaded seats MA of the flanges CFG, for fixing the flanges FLS onto the flanges CFG.

In another embodiment, the flange CFG and the flange FL are made in a single piece.

The curved ends of the arms BR1 and BR2 of the fork FO support the platform or board PT.

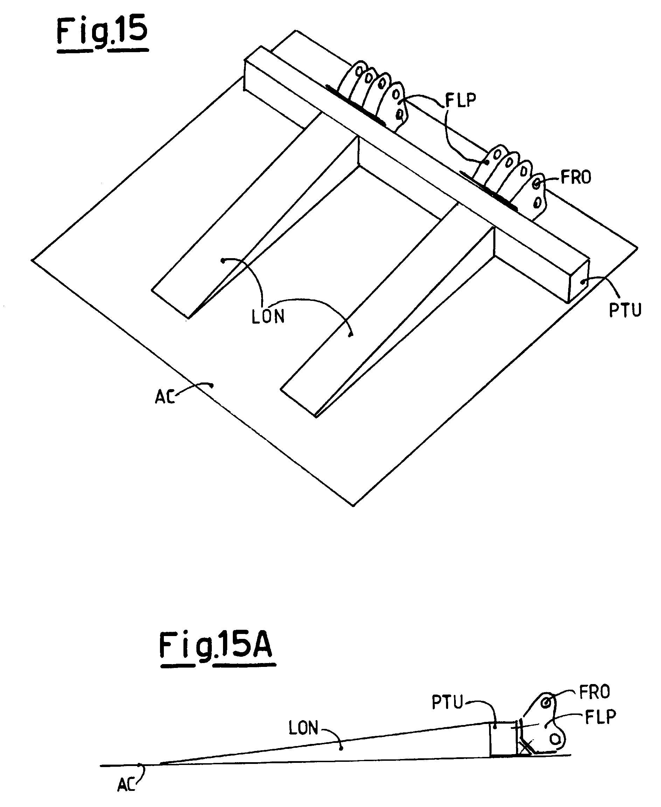

In a first embodiment, the platform PT for vertical tailgates (figure 15, 15A) is composed of a steel plate AC screwed or riveted or bolted onto a tubular section PTU. Onto the section PTU are bolted two platform flanges FLF made of self-lubricating material such as, for example, spheroidal cast iron. The fork FO and at least one tilting cylinder CJ act as fulcrum on the flanges FLP. An opposite portion of the platform PT carries two side members LON, which are connected in such a way that they may be removed, for example by means of screws, bolts, rivets or combinations of these.

It is clear how this type of construction allows very simple replacement of any damaged or worn part, in particular of the flanges FLP, and allows much more efficient rust-resistant finishes. In other versions of the lifting tailgate according to the invention, the side members LON and the tubular section PTU are welded or, at any rate, coupled with a mixed fixing system.

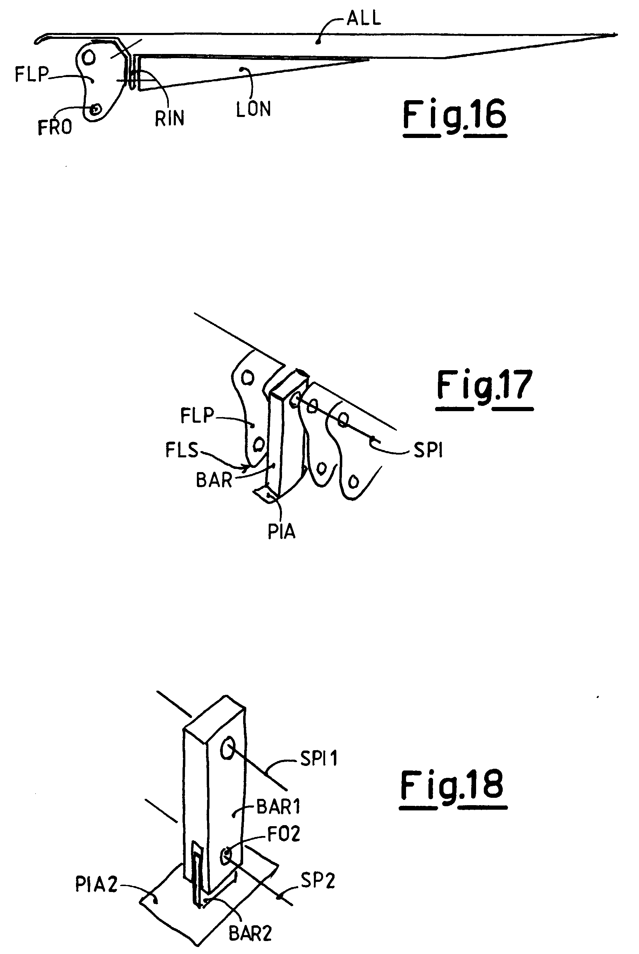

A second embodiment of the platform for vertical tailgates (figure 16) is composed of a series of aluminium sections ALL, welded or jointed together.

A head section of the sections ALL preferably presents a downward protuberance RIN which is gripped between the two flanges FLP, made of self-lubricating material, such as spheroidal cast iron, and two side members LON. The fork FO and at least one tilting cylinder CJ act as fulcrum on the flanges FLP. An opposite portion of the platform PT carries two side members LON, which are connected in such a way that they may be removed, for example by means of screws, bolts, rivets or combinations of these.

It is clear how also this type of construction allows very simple replacement of any damaged or worn part, in particular of the flanges FLP. In a different embodiment of the lifting tailgate according to the invention, the side members LON are welded.

The two versions of the platform PT have numerous features in common. In fact the flanges FLP for connection to the fork FO and to the tilting cylinders CJ are identical, in the illustrated embodiments of the lifting tailgates. Moreover, in both cases the flanges FLP are made of self-lubricating material such as spheroidal cast iron; in addition they are bolted onto the other components and are therefore easy to replace. The flanges FLP have holes FRO in which the further pins PIN are inserted without any intermediate processing or intermediaries against friction.

These pins have the characteristics already described (figure 8).

Another common feature (figure 17) is that of having, preferably in the centre of each flange FLP, a tilting system for making contact with the ground. This system comprises a vertical bar BAR with a hole in an upper portion. In this hole is inserted an end portion of a pin SPI of the fork FO, so that the bar BAR can rotate in the pin SPI for a few positive or negative degrees with respect to an axis orthogonal to the platform. A lower part of the bar BAR ends with a slightly arched plate PIA which protrudes slightly below the bottom part FLS of the flange FLP.

When the platform goes down to the ground with the load, because of the law of gravity the two bars are in absolutely vertical position, that is with respect to the ground, and they touch the ground keeping the flanges FLP raised off the ground.

With each shortening or lengthening movement of the tilting cylinders CJ and/or with each movement of the vehicle, the two bars BAR rotate slightly, discharging all the mass onto the ground with a moving pressure without scraping.

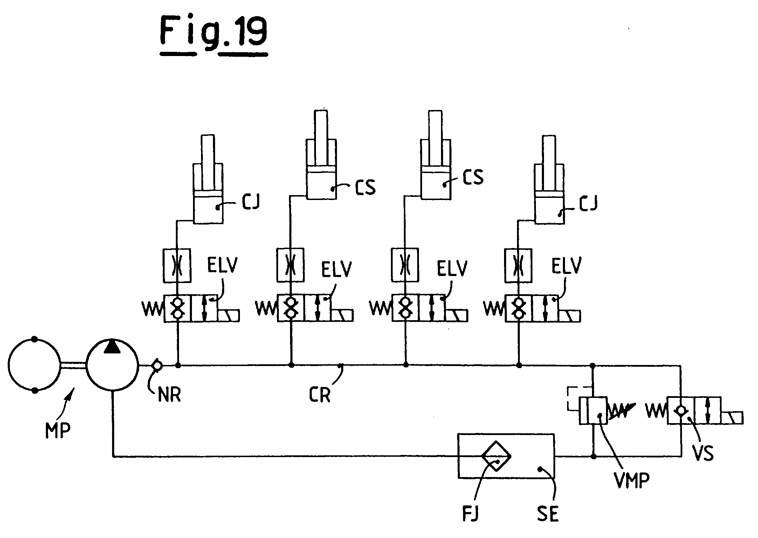

In a different embodiment (figure 18), the tilting system for making contact with the ground is composed of a vertical bar BAR1 with a hole in its upper part. A pin SPI1 of the fork FO goes into this hole, so that the bar BAR can rotate in the pin SPI for a few positive or negative degrees with respect to an axis orthogonal to the platform PT.

In this second version the bar BAR ends with a second hole FO2 in which is inserted a pin SP2 which couples the bar BAR to a bar section BAR2 on which is a coupling hole. At one end of the bar section BAR2 is a plate PIA2, preferably flat, which protrudes slightly below the bottom part FLS of the flange FLP. When the platform goes down to the ground with the load, because of the law of gravity the two bars are in absolutely vertical position and they touch the ground keeping the flanges FLP raised off the ground. With each shortening or lengthening movement of the tilting cylinders CJ and/or with each movement of the vehicle, the two bars BAR-BAR2 rotate slightly, discharging all the mass onto the ground with a moving pressure which is compensated by the double articulation SPI1, SP2 and touching the ground without scraping on a broad surface.

Moreover, the lifting tailgate to which the invention refers is provided with a hydraulic circuit with an integral recycling loop for hydraulic oil (figure 19), which almost completely eliminates the risk of valve blockage. These blockages are frequently due to the stagnation of impurities in the portion of hydraulic oil which remains not recycled in the part of the hydraulic circuit between the cylinders and the discharge valve, and which is therefore not filtered; this risk is common to all the hydraulic distribution systems currently used in lifting tailgates.

In the invention, the hydraulic oil sucked up from the tank SE through a filter FJ is sent under pressure into a hydraulic circuit CR by a hydraulic pump P or by a hydraulic actuator. The oil is sent into the hydraulic circuit CR through a non-return valve NR and distributed to the lifting cylinders CS and/or the tilting cylinders CJ. Distribution is preferably carried out by means of double seal electrovalves ELV, while one discharge electrovalve VS remains closed. Near the electrovalve VS there is a safety valve for maximum pressure VMP.

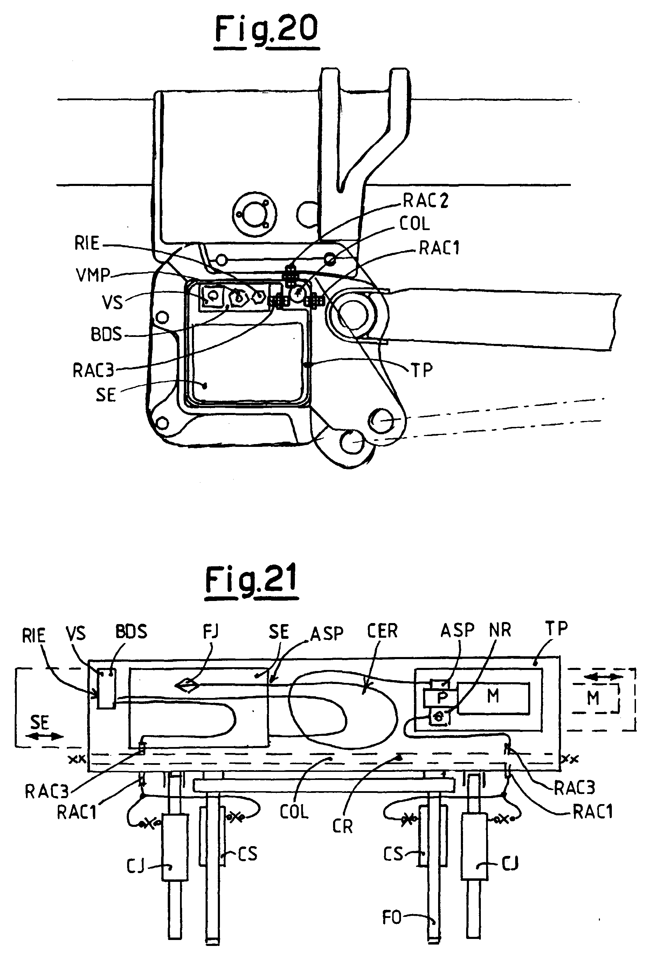

Figure 20 shows, as an example, a section of the tube TP made for example of aluminium. The tube TP has a duct hole COL made directly by extruding the aluminium, to which are connected one or more couplings RAC1, RAC2, RAC3. Inside the tube TP are shown a distribution block BDS which contains the discharge valve VS, the maximum pressure valve VMP, a coupling for filling with liquid RIE and the liquid tank SE.

Figure 21 shows a schematic representation of the layout of one of the possible constructive solutions of the lifting tailgate to which the invention refers, schematically indicating the functional application of the loop circuit. At one of the ends of the tube TP is placed the motor M to which is joined a pump P which supplies pressure to the hydraulic liquid. The hydraulic liquid is sucked up by the pump through the tube ASP, preferably flexible, which is connected with a loop CER to the tank SE from which it takes the liquid through the filter FJ. When the pump P produces pressurised liquid, this is sent to the hydraulic circuit CR comprising the whole portion of tubes and couplings as far as the discharge valve VS. It is sent preferably through a coupling NR, preferably connected directly to the pump P, containing a non-return valve which continues with a flexible pipe, preferably arranged as in the figure. This flexible pipe is connected to the hydraulic duct COL made in the tube TP through a coupling RAC3. The connection hole COL is closed at its ends XX and, through one or more couplings RAC1, it supplies the hydraulic liquid to the cylinders CS and/or CJ as necessary. Through a further flexible hydraulic pipe, arranged preferably as indicated in figure 21 and connected to the coupling RAC3 situated on the side opposite the motor side, the hydraulic circuit CR is connected to a discharge valve VS which in the figure is enclosed in the block BDS. Moreover the block BDS also preferably contains the maximum pressure valve VMP, as well as a coupling RIE which may be used for filling with hydraulic liquid without having to draw it from the tank SE.

The creation of a circuit with the components positioned as shown in figure 21, albeit indicative and without limitation, allows the motor-pump assembly M-P to be completely extracted from the tube TP and, from the opposite side, the block BDS and the tank SE without having to detach any hydraulic tube; any maintenance can therefore be carried out, even operating the lifting tailgate with these elements extracted.

The coupling RAC2, shown in figure 20, shows the possibility of coming out even on the outside and above the tube TP for the connection of another possible hydraulic service, for example the service of retraction of the tailgate and/or the service of hydraulic supports. These accessory services may also require a connection to discharge and, in this case, they may be connected directly to the tank SE or to another coupling contemplated on the block BDS, on the inside of the tube TP.

For particular necessities, in different embodiments, one or more couplings may also be used, positioned diametrically opposite the coupling RAC2.

On the front part of the tailgate, where the quadrilateral is formed by the fork FO and by one or more lifting cylinders CS and by one or more tilting cylinders CJ, the distribution of the hydraulic liquid takes place by means of one or more couplings RAC1, to each one of which is connected a flexible hydraulic pipe that feeds the cylinders. Moreover, the cylinders are preferably provided with a double block valve which constitutes the hydraulic circuit as already described in figure 19.

During lifting of the platform PT, the pressurised oil is diverted into the lifting cylinders CS, opening their electrovalves ELV, while the discharge valve VS remains closed. To close the platform PT, the pressurised oil is diverted into the tilting cylinders CJ, while the discharge valve VS still remains closed. To open the platform PT, the electrovalves ELV of the tilting cylinders CJ and the discharge valve VS are opened. To bring down the platform PT, the electrovalves ELV of the lifting cylinders CS and the discharge valve VS are opened. Moreover, other hydraulic pressure outlets for other services may be created in the same circuit CR.

Since the discharge valve VS is positioned on one side, opposite the pump P, of a loop comprising the circuit CR, the oil pumped and sent into the circuit CR is completely discharged into the tank SE through the electrovalve VS. In this way almost complete recycling of the hydraulic oil is guaranteed and its complete refiltering during suction. Consequently newly filtered oil is always sent in under pressure, with the almost total certainty that there will be no blockages of the system.

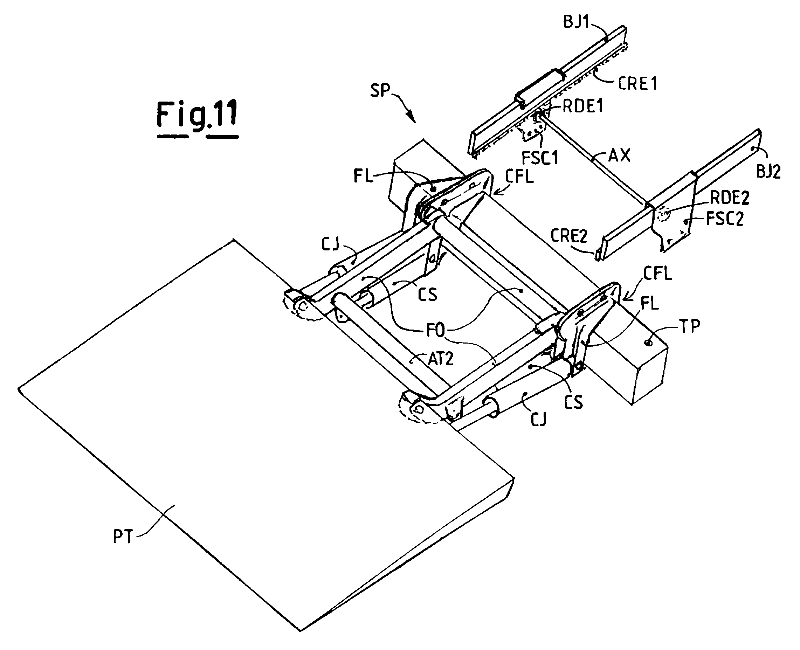

Figure 11 shows an example of embodiment of a retractable tailgate SP according to the invention.

The retractable tailgate SP must slide to take up its position under the industrial vehicle when at rest and travelling. This is done by making the tailgate slide on tracks BJ, BJ1, BJ2 by means of sliding flanges FSC, FSC1, FSC2 connected to a bearing tube TP, preferably in such a way that they may be removed. The flanges FSC of the retractable tailgates are preferably made of self-lubricating material, for example spheroidal cast iron, which may be used to make the whole lifting tailgate SP slide on the tracks BJ1, BJ2 from working position to travelling and rest position, retracted, without interposition of any element against friction since cast iron, for example spheroidal cast iron, is a material with strong self-lubricating characteristics.

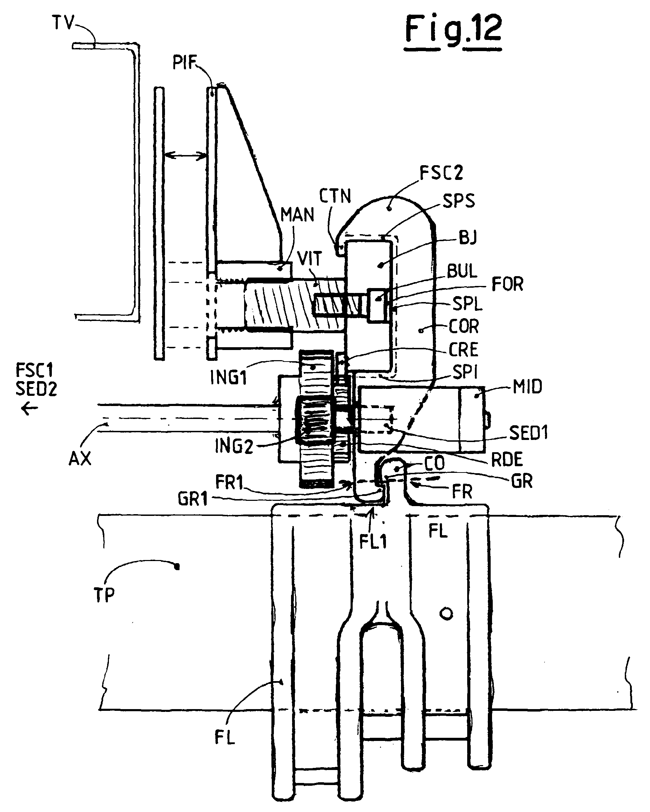

The tube TP (figure 11, 12) has a flange FL which preferably presents a rib CO. The rib CO preferably presents an enlarged portion shaped to form a step GR which allows the removable connection of the sliding flange FSC, FSC1, FSC2.

Each flange FSC, FSC1, FSC2 is approximately of the same length as the flanges FL and has preferably an enlarged portion shaped to form a step GR1 which faces upward, when the flanges FSC, FSC1, FSC2 are fitted on the flanges FL, and its length is preferably the same as that of the flanges FSC1, FSC2. The sliding flanges FSC, FSC1, FSC2 mate with the ribs CO of the flanges FL, forming a joint with the steps GR, GR1, while a rear portion of the sliding flanges FSC, FSC1, FSC2 can rest against an upper portion FL1 of the flanges FL. The flanges FSC, FSC1, FSC2 preferably present through holes FR1 corresponding to through holes FR in the flanges FL which allow the coupling to be blocked with bolts.

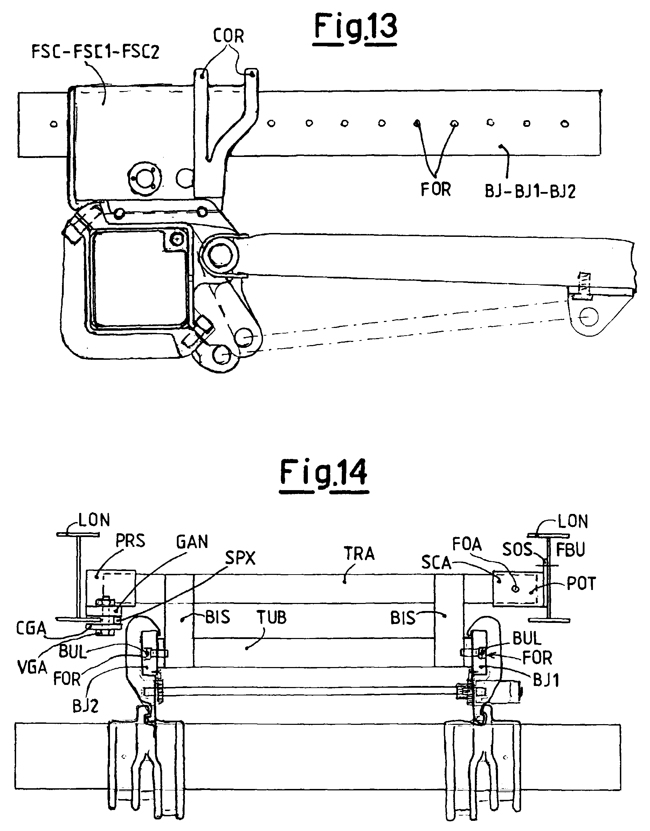

The sliding flanges FSC, FSC1, FSC2 present a portion that forms seats in which the tracks BJ, BJ1, BJ2 can slide. Viewed vertically, this portion is shaped like a spanner, forming spaces in which the tracks BJ, BJ1, BJ2 are inserted, and forming the means of connection to the vehicle chassis. In particular each flange FSC, FSC1, FSC2 preferably presents reinforcing sections COR (figure 13), a flat intermediate side joining and covering section SPL which extends above with a large sliding surface SPS on the tracks BJ, BJ1, BJ2 and ends with a side containing structure CTN.

Moreover the section SPL extends below with a large sliding surface SPI. The flanges FSC, FSC1, FSC2 are preferably made of self-lubricating material, such as spheroidal cast iron, so that they can slide on the tracks BJ, BJ1, BJ2 without requiring lubrication or the interposition of anti-friction materials.

The tracks BJ, BJ1, BJ2 are made of metal sections on the bottom ends of which is preferably fixed a rack CRE, CRE1, CRE2.

On each rack CRE, CRE1, CRE2 is engaged a toothed wheel RDE1, RDE2 keyed onto an axis AX the ends of which are inserted, in such a way that they can rotate, in seats SED1, SED2 in the flanges FSC, FSC1, FSC2. A further toothed wheel ING1 is keyed onto the ends of the axis AX, near a toothed wheel RDE, RDE1, RDE2. The toothed wheel ING1 is associated with a toothed wheel ING2, preferably smaller, keyed onto the axis of a hydraulic motor MID or of a gear motor which can make it rotate.

The diameters of the two toothed wheels ING1, ING2 may of course be calculated differently to obtain a suitable reduction of the motor transmission speed, but in other embodiments the toothed wheels ING1, ING2 are even eliminated and the thrust of the motor MID is transmitted directly to the axis AX.

In a preferred embodiment the rack system CRE generates a synchronised right-left movement.

As shown in figure 12, each track BJ, BJ1, BJ2 is fixed onto the vehicle chassis TV by means of couplings MAN. The couplings MAN are integral at one end with a plate PIF suspended on the vehicle chassis TV, while they are internally threaded and hold a screw VIT at the opposite end. The screw VIT strikes against the track BJ, BJ1, BJ2 and presents on its axis a threaded longitudinal hole, aligned with a hole FOR in the track BJ, BJ1, BJ2, in which is fixed a bolt BUL.

The lifting tailgate may thus be suspended keeping the flanges FL always in the same position on the bearing tube TP and adapting the width of the vehicle chassis to the flanges FL by lengthening or shortening the assembly of couplings MAN - screws VIT, while the sliding flanges FSC, FSC1, FSC2 engage their step GR1 in the step GR of the flanges FL, all blocked by the through screws inserted in the holes FR, FR1.

The torsional stress caused by the loaded platform is supported by the coupling of the steps GR, GR1 and, at the rear, where the rotatory load leads to the detachment of the two steps, preferably by the resting of the sliding flanges FSC, FSC1, FSC2 against the upper surface FL1 of the flanges FL.

Moreover the tracks BJ, BJ1, BJ2 may present several through holes FOR (figure 13) for inserting bolts BUL, so that the tracks BJ, BJ1, BJ2 may be suspended in their different parts, so as to avoid the protruding parts on the chassis. To increase the bearing capacity of the tailgate without needing to make heavier structures, the suspensions may be increased to three or more on either side to fix the tracks BJ1, BJ2 in at least three points.

In a different embodiment of the retractable tailgate, intended preferably for fitting on semitrailers (figure 14), the tracks BJ, BJ1, BJ2 are connected to cross members TUB of a fixed length. The connection is made by means of bolts BUL inserted in through holes FOR in the tracks BJ, BJ1, BJ2 and screwed into the cross members TUB.

The cross members TUB are connected to second cross members TRA which are positioned above the first and are connected to them by special links BIS. The cross members TRA are positioned inside side members LON which form the chassis of the semitrailer. In one version the dimensions of the cross members TRA are such that they are slightly shorter than the internal distance between the vertical bodies that make up the side members LON, for example 30 millimetres (0.03 metres) or less.

On the ends of the cross members TRA is fitted a hanging flange SCA that may be adapted in width.

The flange SCA is composed of a portion of tube POT integral with a plate SOS which is attached to the side members LON by means of bolts inserted in holes FBU. The portion of tube POT may be fixed to the cross members TRA by means of a blocking bolt inserted in through holes FOA aligned with corresponding holes in the cross members TRA.

In another preferred version, the dimensions of the cross members TRA are such that they are slightly shorter than the internal distance between the horizontal lips of the side members LON, so as to be able to prepare the tailgate on the ground and simply lift it inside the chassis for assembly. On the ends of the cross members TRA is fitted a section PRS, for example a tube, sliding on the end portion of the cross member TRA, large enough not to protrude from the ends of the latter so as not to prevent entry between the side members when lifting for assembly.

Attached to the bottom of the section PRS is a flat jaw GAN with a mobile counter-jaw CGA below it, preferably held in position by one or more screws VGA, and with a portion of side section SPX with a thickness preferably the same as the thickness of the bottom wing of the chassis LON, located on the side opposite the chassis wing LON.

When the tailgate is raised in the centre of the side members LON with the sections PRS fitted on the cross member TRA, the sections themselves are extracted as far as a position where, by tightening the screw VGA and interposing the shim SPX, the lower lip of the chassis LON is pinched between the jaw GAN and the counter-jaw CGA, blocking the tailgate in position.

In these cases too it is possible to suspend the lifting tailgate, keeping the flanges FL always in the same position on the tailgate and adapting the width of the vehicle chassis to the flanges FL, if necessary shortening the cross members TRA and adapting the hanging flanges SCA-PRS, leaving all the other elements unchanged.

By making the track connection as described, articulated structures are created which allow the width of the vehicle chassis to be adapted to the distance of the flanges FL.

In the invention the mass applied on the platform PT is discharged directly on the vehicle chassis TV through the parallelogram fork FO - cylinders CJ, connected to the flanges FL which, in turn, are directly connected to the flanges FLS (in the case of a vertical tailgate) or to the flanges FSC (in the case of a retractable tailgate). These are connected directly or indirectly through further interposed means, for example CFL, BJ, VIT, MAN, TUB, BIS, TRA, etc., to the chassis TV and/or the counter-chassis of the vehicle.

The system of direct discharge of the mass from the platform PT onto the chassis TV and/or the counter-chassis of the vehicle completely relieves the bearing tube TP of the function performed so far of supporting the torsional stress transmitted to it by the mass applied on the platform PT through the parallelogram fork FO - cylinders CJ. In fact, this mass had to be retransmitted to the flanges FS (figure 3) or to the sliding flanges FSC (figure 4) applied on the bearing tube TP in a position detached from the flanges FL, counteracting the enormous torsional stress exerted.

The direct discharge of the mass from the platform PT onto the chassis TV allows the use of a tube TP that is no longer a bearing tube, but has only the function of a base on which the tailgate is assembled and transported, and of containing the power and distribution components. The tube TP may therefore be made of even light materials, for example aluminium and/or plastic. In this embodiment aluminium was chosen because its formation by extrusion allows the direct creation by extrusion of one or more ducts COL (figure 20) for the passage and transmission of the hydraulic liquid under pressure or in discharge.

Preferably the first flanges FL, the second flanges CFL and the third flanges CF, FSC1, FSC2 are all removable.

From the description given, the characteristics of the lifting tailgate with interchangeable elements and direct suspension to which this invention refers, may be clearly seen, just as the advantages are clear.

In particular, these advantages are represented by extreme ease and economy of maintenance, in addition to its high reliability.

It is clear that numerous other variations may be made to the lifting tailgate with interchangeable elements and direct suspension to which this invention refers, without for this reason departing from the inherent principles of innovation of the inventive idea, and it is clear that, in the practical use of the invention, the materials, forms and dimensions of the details illustrated may be whatever required and they may be replaced with others that are technically equivalent.

## Claims

1. Lifting tailgate (SP) with interchangeable elements comprising at least one bearing tube (TP) for connection to a portion of an industrial vehicle, said bearing tube (TP) supporting, by means of at least one first flange (FL), at least one fork (FO), controlled by at least one cylinder (CS, CJ), said fork (FO) carrying at least one platform (PT), characterised in that at least one said first flange (FL) is made of self-lubricating material .

2. Tailgate (SF) according to claim 1, characterised in that at least said first flange (FL) is connected to said bearing tube (TP) in such a way that it may be removed.

3. Tailgate (SP) according to claim 1, characterised in that said first flange (FL) is connected to said bearing tube (TP) by at least one second flange (CFL).

4. Tailgate (SP) according to claim 1, characterised in that at least one portion of said first flange (FL) presents at least one rib (CO).

5. Tailgate (SP) according to claim 4, characterised in that said rib (CO) presents at least one free end.

6. Tailgate (SP) according to claim 1, characterised in that third flanges (CFG, FSC, FSC1, FSC2) are comprised connected to said first flanges (FL) for connecting said bearing tube (TP) to a chassis of said industrial vehicle.

7. Tailgate (SP) according to claims 5 and 6, characterised in that said third flanges (CFG, FSC, FSC1, FSC2) present at least one shaped portion for associating it with said shaped portion of said ribs (CO) of said first flanges (FL), at least one portion opposite said third flanges (CFG, FSC, FSC1, FSC2) presenting means of connection to said vehicle.

8. Tailgate (SP) according to claim 7, characterised in that said shaped portion of said third flanges (CFG, FSC, FSC1, FSC2) forms at least one step (GR1), said step (GR1) being suitable for mating with at least one second step (GR) of said ribs (CO) of said first flanges (FL).

9. Tailgate (SP) according to claim 7, characterised in that said means of connection to said vehicle comprise hanging plates (FLS).

10. Tailgate (SP) according to claim 9, characterised in that said hanging plates (FLS) are composed of at least one pair of flat portions (PV, PV1) joined to at least one second pair of flat portions (POR, POR1) placed substantially at a right angle to the first, between said pairs of flat portions joined substantially at a right angle, said hanging plate (FLS) presenting at least one stiffening, spacing and reciprocal connection structure, said second pairs of flat portions (POR, POR1) being suitable for inserting in calibrated spaces (SPA1, SPA2) formed by protruding parts (AG1, AG2) of said third flanges (CFG).

11. Tailgate (SP) according to claim 7, characterised in that said means of connection to said vehicle comprise at least one portion of said third flanges (FSC) forming seats in which the tracks (BJ1, BJ2) can slide, said tracks (BJ1, BJ2) being connected to said vehicle.

12. Tailgate (SP) according to claim 11, characterised in that at least said third flanges (FSC) are made of self-lubricating material, to allow sliding on said tracks (BJ1, BJ2) without the interposition of anti-friction materials.

13. Tailgate (SP) according to claim 11, characterised in that at least said tracks (BJ1, BJ2) are connected to said vehicle by means of an articulated structure which allows the width of said vehicle chassis to be adapted at least to said first flanges (FL).

14. Tailgate (SP) according to claim 11, characterised in that racks (CRE) are fixed onto said tracks (BJ1, BJ2), there being engaged on each rack (CRE) at least one toothed wheel (RDE1, RDE2) keyed onto an axis (AX), the ends of said axis (AX) being connected, in such a way that they can rotate, to seats (SED1, SED2) on said third flanges (FSC), said axis (AX) being able to turn driven by at least one motor (MID).

15. Tailgate (SP) according to claim 14, characterised in that on said axis (AX) is keyed at least one second toothed wheel (ING1), said second toothed wheel (ING1), being associated with at least one third toothed wheel (ING2), which may be turned driven by said motor (MID).

16. Tailgate (SP) according to claim 15, characterised in that said rack system (CRE) generates a synchronised right-left movement.

17. Tailgate (SP) according to claim 6, characterised in that said third flanges (CFG) present through holes (FR1) aligned with said holes (FR) of said first flanges (FL) so that the assembly may be tightened with bolts inserted in said aligned holes (FR, FR1).

18. Tailgate (SP) according to claim 1, characterised in that it is provided with a hydraulic circuit with an integral recycling loop for hydraulic oil.

19. Tailgate (SP) according to claim 1, characterised in that said platform (PT) is made of components that may be dismantled.

20. Tailgate (SP) according to claim 1, characterised in that said platform (PT) has a tilting system for making contact with the ground without friction.

21. Tailgate (SP) according to claim 20, characterised in that said tilting system comprises a vertical bar (BAR) with a hole in an upper portion, in which is inserted an end portion of a pin (SP1) of said fork (FO), so that said bar (BAR) can rotate in said pin (SPI) for a few positive or negative degrees with respect to an axis orthogonal to said platform (PT), a lower part of said bar (BAR) ending with a slightly arched plate (PIA) which protrudes slightly below at least one platform flange (FLP).

22. Tailgate (SP) according to claim 20, characterised in that said tilting system comprises a vertical bar (BAR1) presenting a hole in its upper part, inside which goes a pin (SPI1) of said fork (FO), so that said bar (BAR) can rotate in said pin (SPI1) for a few positive or negative degrees with respect to an axis orthogonal to said platform (PT), said bar (BAR1) ending with a second hole (FO2) in which is inserted a further pin (SP2) which couples said bar (BAR1) to a bar section (BAR2), said bar section (BAR2) having at one end at least one flat plate (PIA2) which protrudes slightly below at least one platform flange (FLP).

23. Tailgate (SP) according to claim 1, characterised in that said fork (FO) comprises at least one arm (BR1, BR2) in which is obtained at least one tooth (DEN1, DEN2), next to which is applied at least one fourth flange (FSO1, FSO2).

24. Tailgate (SP) according to claim 1, characterised in that a mass applied on said platform (PT) is discharged directly onto a chassis of said industrial vehicle through said fork (FO), with opposed said cylinder (CJ), said first flange (FL), a second flange (CFG-FSC), a hanging flange (FLS) or a track (BJ), a first suspension (VIT-MAN) or a second suspension (TUB-BIS-TRA-SCA-PRS) without exerting torsional stress on the bearing tube (TP).

25. Tailgate (SP) according to claim 1, characterised in that inside the holes (FRO) are inserted pins (PIN) without particular processing or particular intermediaries against friction, to block said fork (FO) or cylinders (CS, CJ) on the flanges (FLP) of said platform (PT) and/or on said first flanges (FL).

26. Tailgate (SP) according to claim 12, characterised in that, to increase the bearing capacity of said tailgate without the need for making heavy structures, said tracks (BJ1, BJ2) are fixed in at least two points, but may be fixed in more points.

27. Tailgate (SP) according to claims 3 and 6 and 21 or 22, characterised in that said first (FL), said second (CFL) and said third flanges (CFG, FSC, FSC1, FSC2) and said platform flanges (FLP) can all be dismantled.

28. Tailgate (SP) according to claim 1, characterised in that said fork (FO) comprises at least one arm (BR1, BR2) on which is applied, at its end adjacent to the bearing tube (TP), a preferably cylindrical section (ART) used also as a rotation fulcrum, articulated fulcrum in two seats (SFO) in the flanges (FL).

29. Tailgate (SP) according to claim 28, characterised in that said fork (FO) comprises a second section (AT2), preferably cylindrical, forming the fourth side of an anti-torsion quadrilateral.

30. Tailgate (SP) according to claim 1, characterised in that said fork (FO) is of the traditional type and rotates on the side of the bearing tube (TP) between two raised parts of the flange (FL) to which it is connected by means of a pin (PIN) fixed in the fork (FO) by means of a split pin (SPI), the pin (PIN) rotating between the two prominent plates of the flange (FL).
